# NEUE EUROPÄISCHE PATENTSCHRIFT

(11) **EP 1 436 170 B2**
(45) Veröffentlichungstag und Bekanntmachung des Hinweises auf die Entscheidung über den Einspruch: **27.02.2008**
(45) Hinweis auf die Patenterteilung: 23.02.2005
(21) Anmeldenummer: 02760125.1
(22) Anmeldetag: 21.08.2002
(51) Int. Cl.: B60R 21/01

(54) **VERFAHREN ZUR ANSTEUERUNG DER AUSLÖSUNG PASSIVER RÜCKHALTEMITTEL**
METHOD FOR CONTROLLING THE TRIGGERING OF PASSIVE RESTRAINT MEANS
PROCEDE DE COMMANDE DU DECLENCHEMENT DE SYSTEMES DE RETENUE PASSIFS

(30) Priorität: 05.10.2001 DE 10149118
(43) Veröffentlichungstag der Anmeldung: 14.07.2004
(73) Patentinhaber: ROBERT BOSCH GMBH, 70442 Stuttgart (DE)
(72) Erfinder: MORITZ, Rainer, 70794 Filderstadt (DE); STUETZLER, Frank-Jürgen, Farmington Hills, MI 48331 (US)
(86) Internationale Anmeldenummer: PCT/DE2002/003050
(87) Internationale Veröffentlichungsnummer: WO 2003/031234

(56) Entgegenhaltungen:
- EP-A- 1 122 136
- DE-A- 19 722 829
- DE-A- 19 741 631
- DE-A- 19 821 163
- DE-A- 19 822 184
- DE-A- 19 961 799
- DE-A- 19 962 491
- US-A- 6 023 220
- Merrill I. Skolnik, 'Introduction to radar systems', Mcgraw-Hill Inc, New York 1980, Inhaltsverzeichnisseiten ix, vi-viii, und Seiten 398-401,434- 437, 488-491, 540-543.

## Beschreibung

Die Erfindung betrifft ein Verfahren gemäß dem Oberbegriff des Anspruchs 1, siehe DE 199 62 491 A1, insbesondere ein Verfahren zur Ansteuerung der Auslösung passiver Rückhaltemittel in Fahrzeugen, wie Gurtstraffer, Front- und Seiten-Airbagsysteme und dgl., falls als das Vorliegen eines Unfalls zu interpretierende Kriterien vorliegen sowie abhängig vom Unfalltyp, bei dem mittels Sensoren Fahrzustandsparameter und das Nah- und Fern-Umfeld des Fahrzeugs hinsichtlich bestimmter Größen erfaßt und bei Erfassen bestimmter einen Unfalltyp kennzeichnender Kriterien die unfalltyp-spezifische Ansteuerung erfolgt.

Bereits als klassisch kann die Ansteuerung der Auslösung eines Front-Airbags angesehen werden, wenn mittels eines Beschleunigungsaufnehmers eine Verzögerung des Fahrzeuges erfaßt wird, die als der Aufprall des Fahrzeuges auf ein Hindernis zu interpretieren ist. Um den schädlichen Folgen eines Unfalles entgegenzuwirken ist es ferner jedenfalls in Fahrzeugen der oberen Mittelklasse üblich, Seitenairbags und Gurtstraffer vorzusehen. Ferner ist es üblich, abhängig von der Unfallschwere mehrere Treibladungen eines Airbagsystems mit zeitlichem Abstand zu zünden, also auszulösen. Um ein Airbagsystem nicht unnötig auszulösen, ist es auch bekannt, die Sitzbelegung zu erfassen und die Auslösung nur bei belegtem Sitz anzusteuern. Bei Verwendung verschiedener Rückhaltemittel, insbesondere von Seitenairbags ist es auch bekannt, festzustellen, ob die im Sitz befindliche Person sich in der idealen Sitzposition befindet oder nicht, und abhängig davon die Rückhaltemittel in einer der tatsächlichen Sitzposition entsprechenden Art und Weise anzusteuern.

Diese bekannten Systeme arbeiten nicht immer mit ausreichender Sicherheit, so daß es zu vorzeitigen Auslösungen, aber auch zu verzögerten Auslösungen, kommen kann. Es sind daher Systeme entwickelt worden, bei denen Parameter im Nah- und Fern-Umfeld des Fahrzeuges herangezogen werden, um eine Voraussage darüber treffen zu können, ob ein Unfall unmittelbar bevorsteht. Das Umfeld eines Fahrzeuges wird mittels verschiedener Sensorsysteme überwacht, und aus den durch die Überwachung gewonnenen Signalen und deren Kombination wird das direkte Umfeld des Fahrzeuges, soweit es im Einzelfall interessiert, erfaßt. Insbesondere werden Video-Bilderfassungssysteme und auf Radarstrahlung basierende Sensorsysteme verwendet, beispielsweise Fernbereichsradar bei 77GHz mit einer Reichweite von 160-200m und Ultranahbereichsradar mit 24GHz und einer Reichweite von 14-30m.

Durch Auswertung der erfassten Signale und unter Nutzung bekannter Vorhersagemodelle (Prädiktionsmodelle) können bereits vor einem Aufprall (Crash) Parameter wie Relativgeschwindigkeit, Aufprallzeitpunkt, Aufprallort und Aufprallwinkel ermittelt und somit für eine höhere Sicherheit bei der Ansteuerung der Auslösung der passiven Rückhaltemittel verwendet werden. Besonders kritisch ist dabei die sichere Erfassung eines bevorstehenden Rollovers, eines Überrollens um die Fahrzeuglängsachse des Fahrzeuges.

In einem solchen Fall sind ein Gurtstraffer und ein Seitenairbag bzw. ein Fenstervorhang-Airbag (window curtain bag) auzulösen. Kritische Größe ist dabei ein Drehmoment um die Fahrzeuglängsachse. Es kann jedoch bei üblichem Fahren ebenfalls zu starken Momenten um die Fahrzeuglängsachse kommen, etwa bei Kurvenfahrt und gleichzeitigem Fahren über ein rampenähnliches Hindernis, so dass die Gefahr einer gefährlichen Fehlauslösung der Rückhaltemittel groß ist.

Aus EP 1 122 136 A2 ist es bekannt, einen Überrollvorgang mittels einer Bildverarbeitung zu erkennen. Insbesondere werden dabei Informationssignale einer Precrash-Sensorik verwendet oder berücksichtigt. Aus der US 6,023,220 A ist eine Vorrichtung zur Erkennung eines Überrollvorgangs bekannt, bei der in den Außenspiegeln Sende- und Empfangsvorrichtungen vorgesehen sind, die akustische oder optische Strahlung imitieren, und anhand der empfangenen und gesendeten Signale wird entschieden, ob ein Überrollvorgang vorliegt.

Es ist daher Aufgabe der Erfindung, ein Verfahren anzugeben, bei dem die Sicherheit der Erfassung eines Überrollzustandes stark verbessert ist.

Die Aufgabe wird bei einem Verfahren der eingangs genannten Art durch die kennzeichnenden Merkmale des Anspruches 1 gelöst.

Die Erfindung wird durch die Merkmale der Unteransprüche weitergebildet.

Die Erfindung geht von der Erkenntnis aus, dass eine Vorhersage des Bevorstehens eines Überrollens durch Überwachung des Nah- und Fern-Umfeldes des Fahrzeuges möglich ist. Die Erfindung zieht ferner Nutzen aus der Tatsache, dass es bei Bilderfassungssystemen, insbesondere Videosystemen an sich bekannt ist, durch Verarbeitung laufend erfasster Bilddaten auf kommende Bilddaten zu schließen (also diese vorherzusagen) und bei Nichtvorliegen des vorausgesagten Ereignisses auf einen Fehler in der Übertragung zu schließen.

Die Erfindung wird anhand eines Ausführungsbeispiels und der Zeichnung näher erläutert.

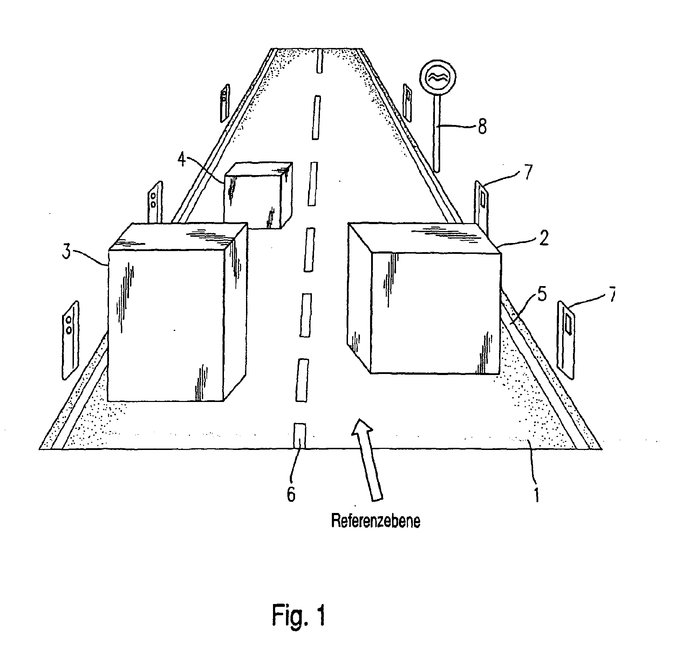

Figur 1 zeigt schematisch den Erkenntniszustand bei einem in Fahrzeugerstreckung nach vorne gerichteten Bilderfassungssystem, wie es bei der Erfindung verwendbar ist.

Figur 1 zeigt schematisch, was mit derzeitiger sogenannter Umfeldsensorik erfassbar ist, was also im Nah- und Fern-Umfeld eines Fahrzeuges erfasst werden kann. Dabei ist zunächst nicht berücksichtigt, ob es sich bei den entsprechenden Sensorsystemen um Video-, also Bilderfassungssysteme, oder Radarsysteme handelt. Bei Betrachtung eines Abbildes des durch das Sensorsystem erfaßbaren Umfeldes, zeigt sich, daß zum einen eine im wesentlichen horizontal gerichtete Referenzebene, nämlich die Fahrbahn 1 vorliegt, die erfaßbar sein soll. Ferner sind Objekte 2, 3 und 4 auf der Fahrbahn 1 erfaßbar, die in der Figur als Quader dargestellt sind wie z. B. andere Fahrzeuge, kurz dynamische Objekte. Es sind ferner Markierungen auf der Fahrbahn 1 erfaßbar, wie eine Randmarkierung 5 und eine Mittelmarkierung 6. Schließlich sind am Rande der Fahrbahn 1 befindliche Objekte ebenfalls erfaßbar, etwa Randpfosten 7 und Verkehrszeichen 8, kurz statische Objekte. Durch regelmäßige, zeitlich beabstandete Erfassung von entsprechenden Abbildern oder zugeordneten Signalen und deren Vergleich untereinander kann ermittelt werden, welche Änderung in der Lage der verschiedenen erfassbaren und diskriminierbaren Objekte zueinander stattgefunden hat, und somit auch erfaßt werden, ob sich das eigene Fahrzeug auf eines der Objekte 2 oder 3, 4 relativ zueinander zu schnell zu bewegt, so daß mit einem Aufprall zu rechnen ist. Mittels Vorhersage- bzw. Prädiktionsverfahren läßt sich berechnen, wann, wo und wie ein Aufprall voraussichtlich stattfinden wird. Im Prinzip in gleicher Weise läßt sich feststellen, ob sich das Fahrzeug voraussichtlich nach außerhalb der Fahrbahn 1 bewegen wird. Abhängig davon können Warnsignale abgegeben und Insassenschutzfunktionen vorbereitet werden, insbesondere passive Rückhaltemittel wie Gurtstraffer, Front- und Seitenairbags zu deren Auslösung im Aufprallfall vorbereitet werden, wodurch die Auslösesicherheit und der Schutz gegen Fehlauslösung stark erhöht werden.

Erfindungsgemäß werden solche das Umfeld betreffende Umfelddaten, wie Videobilddaten eines Videosystems, Radarbilddaten eines Radarsystems und/oder Sensordaten von diskreten Sensoren, auch dahingehend untersucht, ob sich die Orientierung der Fahrbahn 1 als Referenzebene und die Orientierung der Fahrzeugquerachse eines fahrzeuginternen Koordinatensystems mit Fahrzeuglängsachse, Fahrzeugquerachse und Fahrzeughochachse derart gegeneinander relativ bewegen, daß das Fahrzeug einer Drehung mit vorgegebener Drehrate um die Fahrzeuglängsachse unterliegt, also einem Moment um diese Fahrzeuglängsachse. Mittels des Vorhersageverfahrens kann ferner ermittelt werden, wie sich der Winkel zwischen der Fahrzeugquerachse und der Ebene der Fahrbahn 1 bzw. einer hieraus ermittelbaren Horizontlinie über die Zeit ändert. Hieraus kann vorhergesagt werden, ob diese Änderung voraussichtlich derart ist, daß mit einem Überrollen des Fahrzeuges gerechnet werden muß. Für diesen Fall wird die Ansteuerung der Auslösung entsprechender Rückhaltemittel vorbereitet.

Falls durch die ermittelten Umfelddaten die Fahrbahn 1 als Referenzebene nicht unmittelbar erfaßbar ist, so kann diese aus den Umfelddaten für die statischen Objekte 5, 6, 7, 8 und /oder für die dynamischen Objekte 2, 3, 4, ohne große Probleme berechnet werden.

Überfährt das Fahrzeug einseitig ein kurzes rampenartiges Hindernis (Welle, Schlagloch), das das fahrzeugeigene Dämpfersystem nicht auszugleichen vermag, so wird zwar zunächst gemäß der Erfindung eine Drehung um die Fahrzeuglängsachse ermittelt, jedoch wird unmittelbar anschließend eine Drehung des Fahrzeuges um die gleiche Fahrzeuglängsachse in Gegenrichtung ermittelt, so daß ein Ausgleich erfolgt und das Überfahren eines solchen rampenartigen punktuellen Hindernisses keinesfalls als zu einem möglichen Überrollen führend interpretiert werden kann.

Fährt das Fahrzeug auf ein längerdauerndes vergleichbares Hindernis, beispielsweise einseitig auf einem Bürgersteig, so wird dies ebenfalls mittels des Vorhersageverfahrens erkannt. Insbesondere kann zwischen dem dynamischen Zustand, dem Auffahren auf die Rampe und dem Abfahren von dieser, und dem statischen Zustand, dem ziemlich stabilen Fahren in der Schräglage unterschieden werden, wobei insbesondere lediglich beim Auffahren auf die bzw. Abfahren von der Rampe die Gefahr eines Überrollens besteht.

Ähnliches gilt für das einseitige Hinabfahren bzw. Hinauffahren an einer Böschung, wobei bei diesem dynamischen Vorgang des Fahrens in die Schrägstellung die Gefahr des Überrollens besteht.

Es ist einzusehen, daß bei höherer Fahrgeschwindigkeit die Gefahr des Überrollens höher ist. Dies kann durch Erfassen der Ist-Geschwindigkeit des Fahrzeugs und deren Einbeziehung in die Auswertung berücksichtigt werden.

Es ist ferner einzusehen, daß bei Kurvenfahrten die Gefahr eines Überrollens radial nach außen höher ist als radial nach innen, so daß es zweckmäßig ist, die Kurvenfahrt zu berücksichtigen, etwa durch Erfassen des Lenkwinkels oder eines anderen entsprechenden Kriteriums.

Eine hohe Gefahr, daß es zu einem Überrollen kommt, besteht dann, wenn das Fahrzeug den Rand der Fahrbahn 1 überfährt, insbesondere dann, wenn es dort auf eine ansteigende Böschung oder Rampe oder eine abfallende Böschung trifft. Zweckmäßig werden daher mittels der erfindungsgemäßen prädiktiven Umfelddatenverarbeitung die Umfelddaten daraufhin untersucht, ob das Fahrzeug vorhersagbar den Fahrzeugrand überfahren wird, wie er beispielsweise durch die Randmarkierung 5, durch die Folge von Randpfosten 7, durch Verkehrszeichen 8 oder auch nur durch die Abweichung der vergleichsweisen ebenen Fahrbahn 1 im Vergleich zu einer vergleichsweisen unebenen rauhen Umgebung definiert ist. Das Verlassen der Fahrbahn 1 alleine läßt allerdings noch nicht voraussehen, ob es zu einem Überrollen kommen könnte oder nicht. Vielmehr ist auch hier die Auswertung im Hinblick auf die Drehrate, den Drehwinkel, zweckmäßig unter Berücksichtigung der Fahrzeuggeschwindigkeit und/oder des Lenkwinkels, zweckmäßig, um mit hoher Sicherheit voraussagen zu können, ob ein Überrollen stattfinden wird oder nicht.

Aus Vorstehendem ergibt sich, daß ein Schwellenwert des Drehmomentes um die Fahrzeuglängsachse, jenseits dessen ein Überrollen stattfindet oder jedenfalls mit dem Stattfinden des Überrollens mit höchster Wahrscheinlichkeit gerechnet werden muß, von weiteren Parametern des Fahrzustandes aber auch des Fahrzeugzustandes beeinflußt ist. Sowohl hohe Fahrzeug-Ist-Geschwindigkeit als auch hoher Lenkwinkel lassen diesen Schwellenwert bei der Auswertung der Umfelddaten nach unten verschieben. Ferner kann der Beladungszustand des Fahrzeugs Einfluß auf diesen Schwellenwert besitzen. Ist nur der Fahrersitz belegt, so liegt der Schwerpunkt des Fahrzeuges relativ hoch, so daß bei geringeren Drehmomenten mit einem Überrollen gerechnet werden muß, als wenn alle Sitze belegt sind oder das Fahrzeug beladen ist. Eine Dachlast allerdings läßt wiederum den Schwerpunkt des Fahrzeuges nach oben wandern, so daß hier bei geringeren Drehmomenten mit einem Überrollen gerechnet werden muß. Durch Erfassen entsprechender Parameter kann dies berücksichtigt werden und damit die Sicherheit der Erfassung der Gefahr des Überrollens stark verbessert werden.

Ist das Fahrzeug in starker Schräglage geparkt, ist es zweckmäßig bei der Inbetriebsetzung diese Schräglage zu erfassen, um zu Fahrtbeginn eine fehlerhafte Vorhersage zu vermeiden. Dies erfolgt zweckmäßig durch die Erfassung des Absolutwinkels des Fahrzeuges zur Vertikalen oder Horizontalen mittels entsprechender Sensoren.

Bewegt sich das Fahrzeug nicht auf einer vergleichsweise ebenen Fahrbahn 1 sondern im unwegsamen Gelände (sogenannte Off-Road-Situation) so erfährt das Fahrzeug sehr häufig Momente um seine Fahrzeuglängsachse. Aufgrund der niedrigen Fahrgeschwindigkeit beim Auffahren auf bzw. beim Abfahren von derartigen Hindernissen, kommt es nur selten zu Situationen, bei denen mit dem Überrollen gerechnet werden muß. Allerdings muß auch hier sichergestellt werden, daß die Gefahr eines Überrollens rechtzeitig erkannt, bzw. rechtzeitig vorhergesagt werden kann. Das erfindungsgemäß verwendete Umfelderfassungssystem erlaubt es, im Nahbereich des zu erwartenden Fahrschlauchs die Bodenbeschaffenheit daraufhin zu untersuchen, ob bei dem Überfahren eines entsprechenden Hindernisses aufgrund dessen Höhe gegenüber der Umgebung mit einer solchen Schrägstellung des Fahrzeuges gerechnet werden muß, daß mit einem Überrollen gerechnet werden muß. Hierbei können auch andere im Fahrzeug vorliegende, also interne Daten herangezogen werden, wie diejenigen eines GPS-Systems. Insbesondere mittels letzteren kann das Vorliegen der Off-Road-Situation einfach erfaßt werden.

Insbesondere die Nutzung einer nach vorne gerichteten Ultranahbereichssensorik in Verbindung mit dem Umfelderfassungssystem, aber auch getrennt zu diesem, erlaubt es, derartige gefährliche Situationen vorhersagen zu können, was von besonderer Bedeutung ist, wenn das Fahrzeug eine ansteigende Böschung oder Rampe oder eine abfallende Böschung bereits befährt.

Bewegt sich das Fahrzeug, beispielsweise durch Rutschen, seitlich gegen ein Hindernis wie einen Bordstein, Leitschienen (in der Figur nicht dargestellt) oder dergleichen, besteht die Gefahr eines Kippens des Fahrzeuges um die Oberkante dieses Hindernisses, was zu einem Überrollen führen würde, wenn ein Drehmoment um die Fahrzeuglängsachse im Moment des Aufpralles bestimmter Größe vorliegen würde. Durch Auswertung einer zur Seite gerichteten Ultranahbereichssensorik und deren Berücksichtigung bei der Vorhersage, ob ein Überrollen stattfinden kann oder nicht, kann bereits vor dem Aufprall auf dieses Hindernis eine Abschätzung oder Vorhersage dahingehend erfolgen, ob mit einem Überollen gerechnet werden muß oder nicht. Insbesondere ist es mittels der Ultranahbereichssensorik möglich, sowohl Lage als auch relative Annäherungsgeschwindigkeit dieses Hindernisses zu erfassen. Damit kann vor dem Aufprall die Energie vorausgesagt werden, die ein Moment um die Fahrzeuglängsachse bei Aufprall auf dieses Hindernis auslöst.

Bei Fahrzeugen ist es bereits bekannt, zur Verbesserung der passiven Sicherheit eine sog. Precrash-Sensorik zu nutzen, die bereits vor Beginn eines Crashes oder Aufpralls (Unfalls) Parameter wie Relativgeschwindigkeit, Aufprallzeit, Aufprallort und Aufprallwinkel eines Fahrzeuges gegen ein Objekt, etwa einem der dynamischen Objekte 2, 3 oder 4 ermittelt, und für die Ansteuerung der Auslösung von Rückhaltemittel verwendet. In einem solchen Fall ist es zweckmäßig, die erfindungsgemäße Vorgehensweise zu integrieren. Zum einen können die gleichen Umfelderfassungssignale verwendet werden, zum anderen kann ausgehend vom Erfassen eines möglichen Aufpralls mittels der Precrash-Sensorik ferner auch ermittelt werden, ob in einem solchen Fall bei dem Aufprall auch mit einem Überrollen zu rechnen ist.

Wie vorstehend geschildert, können wesentliche bei der Beurteilung, ob mit einem Überrollen zu rechnen ist oder nicht, herangezogene Daten, wie Fahrzeug-Istgeschwindigkeit, Drehwinkel, Lenkwinkel und dergleichen aus den laufend erfaßten Umfelddaten rechnerisch ermittelt werden. Diese Daten können auch auf andere Weise mittels geeigneter diskreter Sensoren erfaßt und bei der Auswertung berücksichtigt werden, so daß eine höhere Sicherheit hinsichtlich des Erfassens der Möglichkeit eines Überrollens erreicht ist. Hierdurch kann das Auswertungsergebnis zusätzlich auf Plausibilität untersucht werden.

Es ist darauf hinzuweisen, daß bei der Auswertung zur Vorhersage auf der Grundlage von insbesondere Bilddaten die dort üblichen Vorgehensweisen genutzt werden können, beispielsweise Transformationsverfahren wie Fouriertransformationen, diskrete Kosinustransformation oder dergleichen. Im gegebenen Fall kann auch eine Trajektorenprädiktion verwendet werden.

Durch die erfindungsgemäße Auswertung läßt sich demnach mit hoher Sicherheit eine Aussage darüber erlangen, ob bei der jeweils vorliegenden Fahrsituation mit einem Überrollen gerechnet werden muß. Im gegebenen Fall kann die Ansteuerung des Auslösens bereits vorbereitet werden, so daß im gegebenen Fall, also wenn das Überrollen tatsächlich eintritt, die entsprechenden Rückhaltemittel, Gurtstraffer, Seiten-Airbag bzw. Fenstervorhang-Airbag rechtzeitig und sicher ausgelöst werden und so den oder die Fahrzeuginsassen sicher schützen können.

## Patentansprüche

1. Verfahren zur Ansteuerung der Auslösung passiver Rückhaltemittel in Fahrzeugen, wie Gurtstraffer, Front- und Seiten-Airbagsysteme, falls als das Vorliegen eines Unfalls zu interpretierende Kriterien vorliegen sowie abhängig vom Unfalltyp, bei dem mittels Sensoren Fahrzustandsparameter und das Nah- und Fern- Umfeld des Fahrzeugs hinsichtlich bestimmter Größen erfasst werden und bei Erfassen bestimmter einen Unfalltyp kennzeichnender Kriterien die unfalltyp-spezifische Ansteuerung erfolgt, wobei der Unfalltyp das Überrollen um die Fahrzeuglängsachse des Fahrzeugs ist und wobei von einem in Fahrzeugerstreckung nach vorne gerichteten Umfelderfassungssystem laufend erfasste Umfelddaten verarbeitet werden und hinsichtlich des Vorliegens einer Drehung des Fahrzeuges um die Fahrzeuglängsachse ausgewertet werden, wobei aus den Umfelddaten eine Referenzebene ermittelt wird, wie die Fahrbahn (1), **dadurch gekennzeichnet, dass** bei plötzlicher Abweichung der Orientierung dieser Referenzebene gegenüber einem festen Fahrzeug-Koordinatensystem auf ein Auffahren auf eine Rampe geschlossen wird, dass bei häufig aufeinanderfolgenden plötzlichen Abweichungen und nicht allzu hoher Fahrgeschwindigkeit auf ein Fahren in unwegsamem Gelände geschlossen wird (Off-Road-Situation) und die Umfelddaten im zu erwartenden Fahrschlauch des Fahrzeugs hinsichtlich plötzlich auftretender Bodenhindernisse ausgewertet werden, bei Erfassung solcher Bodenhindernisse die zu erwartende Drehung um die Fahrzeuglängsachse vorhersageberechnet und der vorhersageberechnete Wert der Drehung um die Fahrzeuglängsachse mit einem Schwellenwert verglichen wird.

2. Verfahren nach Anspruch 1, **dadurch gekennzeichnet, dass** die Umfelddaten hinsichtlich regelmäßig auftretender oder ständig vorhandener Elemente, wie statische Objekte, wie Fahrbahnmarkierungen (5, 6), Randpfosten (7), Verkehrszeichen (8) und/oder dynamische Objekte (2, 3, 4), untersucht werden und aus ihnen die Referenzebene ermittelt wird.

3. Verfahren nach Anspruch 1 oder 2, **dadurch gekennzeichnet, dass** aus der Änderungsgeschwindigkeit der plötzlichen Abweichung zur Solllage auf die Drehzahl und/oder die Drehrate bzw. das Drehmoment geschlossen wird und bei Überschreiten eines Schwellenwertes auf ein unmittelbar bevorstehendes gefährliches Überrollen geschlossen wird.

4. Verfahren nach einem der Ansprüche 1 bis 3, **dadurch gekennzeichnet, dass** die Umfelddaten hinsichtlich des Vorliegens einer Seitenverschiebung ausgewertet werden und dass bei Erfassung einer einen bestimmten Wert überschreitenden Seitenverschiebung auf ein Verlassen der Fahrbahn und das Befahren einer Böschung geschlossen wird und bei Überschreiten eines Schwellenwertes auf ein unmittelbar bevorstehendes gefährliches Überrollen geschlossen wird.

5. Verfahren nach Anspruch 1, **dadurch gekennzeichnet, dass** zum Feststellen einer Off-Road-Situation auch fahrzeuginterne Daten, wie die eines GPS-Systems, herangezogen werden.

6. Verfahren nach einem der Ansprüche 1 bis 5, **dadurch gekennzeichnet, dass** eine Schrägstellung des Fahrzeuges bei Fahrtbeginn durch Erfassen des Winkels zwischen der Vertikalen oder Horizontalen und der Hochachse des Fahrzeugs oder der Querachse des Fahrzeuges erfasst und zur Auswertung herangezogen wird.

7. Verfahren nach einem der Ansprüche 1 bis 6, **dadurch gekennzeichnet, dass** Fahrzustandsparameter erfasst werden, wie Fahrgeschwindigkeit, Lenkwinkel und dgl. und abhängig von diesen der Schwellenwert eingestellt wird.

8. Verfahren nach einem der Ansprüche 1 bis 7, **dadurch gekennzeichnet, dass** Fahrzeugszustandsparameter erfasst werden, wie Sitzbelegung, Beladung und dgl. und abhängig von diesen der Schwellenwert eingestellt wird.

9. Verfahren nach einem der Ansprüche 1 bis 8, **dadurch gekennzeichnet, dass** mittels einer nach vorne gerichteten Ultranahbereichssensorik für den Fall, dass ein mögliches Überrollen des Fahrzeuges vorhergesagt worden ist, erfasst wird, ob ein Überrollen tatsächlich erfolgt.

10. Verfahren nach einem der Ansprüche 1 bis 9, **dadurch gekennzeichnet, dass** mittels einer zur Seite gerichteten Ultranahbereichssensorik Schwellen, Bordsteine und dergleichen stufenartige Hindernisse erfasst werden und deren Erfassung verwendet wird, um eine Vorhersageberechnung dahingehend durchzuführen, ob bei einem Aufprallen auf die Schwelle, den Bordstein oder dgl. stufenartigen Hindernis ein ein Überrollen auslösendes Moment auftreten kann.

11. Verfahren nach einem der Ansprüche 1 bis 10, **dadurch gekennzeichnet, dass** Informationssignale einer Pre-Crash-Sensorik verwendet oder zusätzlich berücksichtigt werden.

12. Verfahren nach Anspruch 11, **dadurch gekennzeichnet, dass** zusätzlich eine Plausibilitätsprüfung durchgeführt wird.

## Claims

1. Method for controlling the triggering of passive restraining means in vehicles, such as belt tensioners, and front and side airbag systems, if criteria are present which are to be interpreted as an accident being present, and as a function of the type of accident, in which sensors are used to detect driving state parameters and the near and remote environment of the vehicle in respect of certain variables and, if certain criteria characterizing a type of accident are detected, the control specific to the type of accident takes place, the type of accident being the overturning of the vehicle about the longitudinal axis of the vehicle, and environment data detected continuously by an environment-detecting system directed forwards in the extent of the vehicle being processed and being evaluated in respect of the presence of a rotation of the vehicle about the longitudinal axis of the vehicle, a reference plane, such as the carriageway (1), being determined from the environment data, **characterized in that**, if there is a sudden deviation in the orientation of this reference plane in relation to a fixed coordinate system of the vehicle, it is concluded that the vehicle has driven onto a ramp, **in that**, in the case of frequent sudden deviations following one another and a not very high drive speed, it is concluded that driving in rough terrain is taking place (off-road situation) and the environment data in the driving state of the vehicle that is to be expected are evaluated in respect of suddenly occurring ground obstacles and, if such ground obstacles are detected, the rotation that is to be expected about the longitudinal axis of the vehicle is predictively calculated and the predictively calculated amount of the rotation about the longitudinal axis of the vehicle is compared with a threshold value.

2. Method according to Claim 1, **characterized in that** the environment data are investigated in respect of regularly occurring or continuously present elements, such as static objects, such as carriageway markings (5, 6), edge posts (7), traffic signs (8) and/or dynamic objects (2, 3, 4), and the reference plane is determined from them.

3. Method according to Claim 1 or 2, **characterized in that** the changing speed of the sudden deviation from the desired position is used to draw a conclusion about the rotational speed and/or the rate of rotation and/or the moment of momentum and, if a threshold value is exceeded, it is concluded that a hazardous overturning is directly imminent.

4. Method according to one of Claims 1 to 3,
**characterized in that** the environment data are evaluated in respect of the presence of a lateral displacement and **in that**, when a lateral displacement exceeding a certain value is detected, it is concluded that the carriageway has been left and a slope driven onto and, if a threshold value is exceeded, it is concluded that a hazardous overturning is directly imminent.

5. Method according to Claim 1, **characterized in that** data internal to the vehicle, such as the data of a GPS system, are used for ascertaining an off-road situation.

6. Method according to one of Claims 1 to 5, **characterized in that** a sloping position of the vehicle at the beginning of the journey is detected by detection of the angle between the vertical or horizontal and the vertical axis of the vehicle or the transverse axis of the vehicle and is used for the evaluation.

7. Method according to one of Claims 1 to 6, **characterized in that** driving state parameters, such as driving speed, steering angle and the like, are detected and the threshold value is set as a function of them.

8. Method according to one of Claims 1 to 7, **characterized in that** vehicle state parameters, such as seat occupation, loading and the like, are detected and the threshold value is set as a function of them.

9. Method according to one of Claims 1 to 8, **characterized in that** it is detected by means of a forwardly directed ultra-close-region sensor for the situation in which a possible overturning of the vehicle has been predicted whether an overturning is actually taking place.

10. Method according to one of Claims 1 to 9, **characterized in that** verges, curbs and similar step-like obstacles are detected by means of an ultra-close-region sensor directed towards the side and the detection thereof is used in order to carry out a prediction calculation to ascertain whether, during an impact against the verge, the curb or similar step-like obstacle, a moment triggering an overturning can occur.

11. Method according to one of Claims 1 to 10, **characterized in that** information signals of a pre-crash sensor are used or additionally taken into account.

12. Method according to Claim 11, **characterized in that** a plausibility test is additionally carried out.

## Revendications

1. Procédé de commande du déclenchement de systèmes de retenue passifs dans des véhicules, tels que des tendeurs de ceinture et des systèmes de coussins gonflables frontaux ou latéraux, en cas de critères interprétés correspondant à un accident, et en fonction du type d'accident, selon lequel :
- des capteurs saisissent certaines grandeurs concernant des paramètres d'état de circulation ainsi que l'environnement proche et lointain du véhicule,
- la commande se fait de manière spécifique au type d'accident, quand sont saisis certains critères caractérisant un type d'accident,
- le type d'accident est le retournement autour de l'axe longitudinal du véhicule,
- les données d'environnement saisies en continu par un système dirigé vers l'avant par rapport au déplacement du véhicule sont exploitées et évaluées pour déterminer l'existence d'une rotation du véhicule autour de son axe longitudinal, et
- on établit un plan de référence, tel que la voie de circulation (1), à partir des données de l'environnement,
**caractérisé en ce qu'**
quand l'orientation de ce plan de référence par rapport à un système de coordonnées lié au véhicule varie brutalement, on en déduit que le véhicule aborde une rampe, quand des écarts soudains se succèdent souvent, et que la vitesse du véhicule n'est pas trop élevée, on en déduit que celui-ci circule sur un terrain non viabilisé (sortie de route), et les données de l'environnement dans la circulation irrégulière à attendre du véhicule sont exploitées en fonction des obstacles apparaissant soudainement, et quand de tels obstacles sont saisis, la rotation à attendre du véhicule autour de son axe longitudinal est calculée à titre de prévision, et la valeur de rotation autour de l'axe longitudinal ainsi obtenue est comparée à une valeur de seuil.

2. Procédé selon la revendication 1,
**caractérisé en ce qu'**
on examine les données de l'environnement par rapport à des éléments apparaissant régulièrement, ou permanents, tels que des objets statiques, comme des marquages de la voie (5, 6), des poteaux marginaux (7), des panneaux de signalisation (8) et/ou des objets dynamiques (2, 3, 4), et on établit le plan de référence à partir de ces données.

3. Procédé selon la revendication 1 ou 2,
**caractérisé en ce qu'**
la vitesse de rotation et/ou le taux de rotation ou le couple de la rotation sont déduit de la vitesse à laquelle on s'écarte brusquement de la valeur de consigne, et si un seuil est dépassé, on en déduit l'imminence d'un retournement dangereux.

4. Procédé selon une des revendications 1 à 3,
**caractérisé en ce que**
les données de l'environnement sont exploitées en ce qui concerne la présence d'un glissement latéral, et quand un tel glissement dépassant certaines valeurs de seuil est saisi, on en déduit que le véhicule quitte la voie de circulation et roule sur un talus, et si une valeur de seuil est dépassée, on en déduit l'imminence directe d'un retournement dangereux.

5. Procédé selon la revendication 1,
**caractérisé en ce que**
pour déterminer une sortie de route on utilise aussi des données internes au véhicule, telles que celles d'un système GPS.

6. Procédé selon une des revendications 1 à 5,
**caractérisé en ce que**
la position inclinée du véhicule, lorsqu'il commence à circuler, est déterminée en saisissant l'angle existant entre la verticale ou l'horizontale et l'axe vertical ou l'axe transversal du véhicule, cet angle étant utilisé pour une exploitation.

7. Procédé selon une des revendications 1 à 6,
**caractérisé en ce qu'**
on saisit des paramètres d'état de circulation tels que la vitesse de circulation, l'angle de direction et similaires, et la valeur de seuil est établie en fonction de ceux-ci.

8. Procédé selon une des revendications 1 à 7,
**caractérisé en ce qu'**
on saisit des paramètres d'état de circulation tels que l'occupation des sièges, la charge et similaires, et la valeur de seuil est établie en fonction de ceux-ci.

9. Procédé selon une des revendications 1 à 8,
**caractérisé en ce qu'**
au moyen d'une sensorique de très grande proximité dirigée vers l'avant, dans le cas où la possibilité d'un retournement du véhicule a été prévue, on détermine si ce retournement a lieu effectivement.

10. Procédé selon une des revendications 1 à 9,
**caractérisé en ce qu'**
au moyen d'une sensorique de très grande proximité dirigée latéralement, on saisit des seuils, des bordures et obstacles similaires du type gradin, et on utilise cette saisie pour exécuter en continu un calcul prévisionnel déterminant si un choc sur le seuil, la bordure ou l'obstacle similaire du type gradin, peut engendrer un couple déclenchant un retournement.

11. Procédé selon une des revendications 1 à 10,
**caractérisé en ce que**
des signaux d'information d'une sensorique de pré-crash sont utilisés ou pris en compte à titre complémentaire.

12. Procédé selon la revendication 11,
**caractérisé en ce qu'**
un contrôle de probabilité est réalisé à titre complémentaire.
